# EUROPEAN PATENT APPLICATION

(11) **EP 4 006 794 A1**
(43) Date of publication of application: **01.06.2022**
(21) Application number: 21213277.3
(22) Date of filing: 26.04.2017
(51) Int. Cl.: G06Q 10/04

(54) **ROBOTIC LOAD HANDLER COORDINATION SYSTEM, CELL GRID SYSTEM AND METHOD OF COORDINATING A ROBOTIC LOAD HANDLER**

(30) Priority: 26.04.2016 GB 201607285
(62) Divisional of application: 17731068.7
(71) Applicant: Ocado Innovation Limited, Hatfield, Herts AL10 9UL (GB)
(72) Inventor: SHARP, David, Hatfield, Hertfordshire, AL 10 9UL (GB); ZAMMIT, Joseph, Hatfield, Hertfordshire, AL 10 9UL (GB)
(74) Representative: Ocado Group IP Department

(57) **Abstract**

A robotic load handler coordination system comprises a robotic load handler (114) capable of traversing, when in use, a plurality of cells arranged in a grid formation. The load handler (114) is arranged to receive an instruction associated with execution of a selected determined route from a starting cell to a destination cell. A processing resource is arranged to support a movement optimiser, the movement optimiser being arranged to determine a plurality of routes iteratively using an A* pathfinding algorithm in order to determine a number of sets of routes respectively from a number of the plurality of cells to the destination cell. The number of the plurality of cells comprises the starting cell, and the movement optimiser is arranged to select an optimum route to the destination cell from the set of routes in respect of the starting cell.

## Description

The present invention relates to a robotic load handler coordination system of the type that, for example, coordinates traversal of a plurality of robotic load handlers over a grid of cells. The present invention also relates to a method of coordinating a plurality of robotic load handlers, the method being of the type that, for example, coordinates traversal of a plurality of robotic load handlers over a grid of cells.

Some commercial and industrial activities require systems that enable the storage and retrieval of a large number of different products. One known type of system for the storage and retrieval of items in multiple product lines involves arranging storage bins or containers in stacks on top of one another, the stacks being arranged in rows. The storage bins are removed from the stacks and accessed from above by load handling devices, removing the need for aisles between the rows and allowing more containers to be stored in a given space. Methods of handling containers stacked in rows have been well known for decades. In some such systems, for example as described in US patent no. 2,701,065 (Bertel), free-standing stacks of containers are arranged in rows in order to reduce the storage volume associated with storing such containers, but yet still providing access to a specific container if required. Access to a given container is made possible by providing relatively complicated hoisting mechanisms that can be used to stack and remove given containers from stacks. The costs of such systems are, however, impractical in many situations and they have mainly been commercialised for the storage and handling of large shipping containers. The concept of using freestanding stacks of containers and providing a mechanism to retrieve and store specific containers has been developed further, for example as described in European patent no. 0 767 113 (Cimcorp). This document discloses a mechanism for removing a plurality of stacked containers, using a robotic load handler in the form of a rectangular tube that is lowered around the stack of containers, and which is configured to be able to grip a container at any level in the stack. In this way, several containers can be lifted at once from a stack. The movable tube can be used to move several containers from the top of one stack to the top of another stack, or to move containers from a stack to an external location and vice versa. Such systems can be particularly useful where all of the containers in a single stack contain the same product. Such stacks are known as a single-product stacks. In the system described in European patent no. 0 767 113, the height of the tube has to be at least as high as the height of the largest stack of containers, so that that the highest stack of containers can be extracted in a single operation. Accordingly, when used in an enclosed space such as a warehouse, the maximum height of the stacks is restricted by the need to accommodate the tube of the load handler above the stack.

European patent no. 1037828 (Autostore) describes a system in which stacks of containers are arranged within a frame structure. Robotic load handling devices can be controllably moved around the stack on a system of tracks on the uppermost surface of the stack. Other forms of robotic load handling device are further described in, for example, Norwegian patent number 3 173 66.

UK patent publication no. 2 520 104 (Ocado Innovation Limited) discloses a load handling device where each robotic load handler only covers one grid space, thus allowing higher density of load handlers and thus higher throughput of a given size system. However, any suitable form of load handling device can be used.

In the known robotic picking systems described above, robotic load handling devices are controllably moved around the top of the stacks on a track system forming a grid. A given load handling device lifts a bin from the stack, the container being lifted containing inventory items needed to fulfil a customer order. The container is carried to a pick station where the required inventory item can be manually removed from the bin and placed in a delivery container, the delivery container forming part of the customer order, and being manually filled for dispatch at the appropriate time. At the pick station, the items can also be picked by industrial robots, suitable for such work, for example as described in UK patent no. 2 524 383 (Ocado Innovation Limited).

However, robotic picking systems possess a number of limitations. For example, some implementations of robotic load handlers traversing the grid are currently limited in order to avoid the risk of collision. In some instances, the size of the grid is limited. As traffic on the grid increases, the risk of collision rises too. It is also desirable to ensure that the robotic load handlers move in as smooth a manner as possible to reduce excessive acceleration, deceleration, stopping and starting.

"Cooperative pathfinding" (Silver, D., 2005, "Cooperative pathfinding", Young, R. M., and Laird, J. E., eds., AIIDE, 117-122. AAAI Press) discloses algorithms solving the so-called multi-agent path planning problem, where agents need to find non-colliding routes to separate destinations, given full information about the routes of other agents. The algorithms are suitable for use in Real-Time Strategy games and other real-time environments. The algorithms proposed assume that a grid represents space, and use the so-called Manhattan distance as the basis for calculating a cost function. However, this technique is not scalable and does not take into account velocities, accelerations and/or kinematics, but does allows agents to cooperate.

"Optimal route re-planning for mobile robots: a massively parallel incremental A* algorithm" (Tao, et al., IEEE Proceedings of International Conference on Robotics and Automation, 1997, pp.2727-2732) describes a massively parallel incremental A* algorithm where a terrain is modelled based on a uniform grid of squares, where each grid square is mapped to a node in a mesh. Crossing from one square to each neighbouring square is modelled as a directional arc. Each arc has a cost associated with it. The algorithm for a mesh of nodes computes all optimal paths or routes to a goal node by first computing the optimal cost of the goal for each node in the mesh. All paths to the goal are then represented as an exhaustive policy that maps each node in the mesh to a set of edges that when taken from this node lie on the optimal path. However, the massively parallel A* algorithm only considers a single mobile robot and so does not contemplate a cooperation between mobile robots. Additionally, this does not take into account the velocity, acceleration or direction change penalties. Also, the massively parallel A* algorithm disclosed in this document is not efficient at modelling kinematics.

According to a first aspect of the present invention, there is provided a robotic load handler coordination system comprising: a robotic load handler capable of traversing, when in use, a plurality of cells arranged in a grid formation, the load handler being arranged to receive an instruction associated with execution of a subsequently selected determined route from a starting cell to a destination cell; a processing resource arranged to support a movement optimiser, the movement optimiser being arranged to determine a plurality of routes iteratively using an A* pathfinding algorithm in order to determine a number of sets of routes respectively from a number of the plurality of cells to the destination cell; wherein the number of the plurality of cells comprises the starting cell and the destination cell; and the movement optimiser is arranged to select an optimum route to the destination cell from the set of routes in respect of the starting cell.

The A* pathfinding algorithm may be adapted to employ a cost function based upon acceleration of the load handler parameter.

The A* pathfinding algorithm may be adapted to employ a cost function based upon velocity of the load handler parameter.

The A* pathfinding algorithm may be adapted to employ a cost function based upon a direction change parameter.

The A* pathfinding algorithm may be adapted to employ a cost function based upon any respective reserved status of a cell in each route of the number of sets of routes.

The system may further comprise: the movement optimiser determining a plurality of sets of routes respectively from the number of the plurality of cells to the destination cell; and the movement optimiser may select the number of sets of routes from the plurality of sets of routes using the cost function.

Each set of the number of sets of routes may comprise less than nine routes.

The system may further comprise: the movement optimiser being arranged to model a number of functional representations of a number of cells in the optimum route, respectively; wherein each of the number of functional representations of the number of cells may be arranged to assess reservation thereof sequentially in respect of following the optimum route in order to generate a reserved route.

The reservation may be assessed in respect of a time window associated with cell occupation by the load handler.

The time window may be determined by accounting for physical constraints and tolerances associated with translation of the load handler.

The physical constrains may be physical obstacles. The tolerances may be kinematic tolerances.

The movement optimiser may be arranged to repeat assessment of reservation a predetermined number of times in response to determining that a cell in the optimum route is unavailable in respect of a required time.

The movement optimiser may be arranged to re-execute the A* pathfinding algorithm in response to determining that a cell in the optimum route is unavailable in respect of a required time.

The re-execution of the A* pathfinding algorithm may be in respect of a number of cells within a bounding box defined by a predetermined supremum norm limit with respect to a current cell. The supremum norm limit may be five cells.

The movement optimiser may be arranged to select a revised optimum route from a current cell to the destination cell from a revised set of routes generated by re-execution of the A* pathfinding algorithm; and each of another number of functional representations of the number of cells may be arranged to assess reservation thereof sequentially in respect of following the revised optimum route in order to generate a revised reserved route.

The processing resource may be arranged to support a controller module; and the controller module may be arranged to instruct the load handler to follow the reserved route.

The number of plurality of cells may have a number of policies associated therewith the number of policies respectively may comprise the number of sets of routes.

The number of policies respectively may further comprise kinematic data.

The number of policies respectively may further comprise scheduling data.

According to a second aspect of the invention, there is provided a robotic picking system comprising the robotic load handler coordination system as set forth above in relation to the first aspect of the invention.

According to a third aspect of the invention, there is provided a method of coordinating traversal of a robotic load handler across a plurality of cells arranged in a grid formation, the method comprising: the load handler receiving an instruction associated with execution of a subsequently selected determined route from a starting cell to a destination cell; determining a plurality of routes iteratively using an A* pathfinding algorithm in order to determine a number of sets of routes respectively from a number of the plurality of cells to the destination cell; wherein the number of the plurality of cells comprises the starting cell and the destination; and select an optimum route to the destination cell from the set of routes in respect of the starting cell.

According to a fourth aspect of the invention, there is provided a computer program element comprising computer program code means to make a computer execute the method as set forth above in relation to the third aspect of the invention.

It is thus possible to provide a system and method that is scalable to use with a large number of load handling devices on a large grid. Additionally, the speed and efficiency of the system is greater than existing systems. Furthermore, the instances of collision of load handling devices is obviated or at least mitigated without undue restriction to the coordination of the load handling devices.

At least one embodiment of the invention will now be described, by way of example only, with reference to the accompanying drawings, in which:
**Figure 1** is a schematic perspective view of a frame structure for housing a plurality of stacks of bins in a storage system;
**Figure 2** is a schematic plan view of part of the grid structure of Figure 1;
**Figures 3** is a schematic perspective view of one form of robotic load handling device for use with the frame structure of Figures 1 and 2;
**Figure 4** is a schematic cut-through perspective view of the robotic load handling device of Figure 3 comprising a storage bin in a stowed position;
**Figure 5** is a schematic cut-through perspective view of the robotic load handling device of Figure 3;
**Figure 6** is a schematic perspective view of the frame structure housing stacked storage bins of Figure 1 with a plurality of robotic load handling devices of Figure 3 operating thereupon;
**Figure 7** is a schematic diagram of a robotic load handling coordination system constituting an embodiment of the invention;
**Figure 8** is a schematic diagram of functional modules supported by the robotic load handling system of Figure 7 and constituting another embodiment of the invention;
**Figure 9** is a schematic diagram of the robot control system of Figure 8 in greater detail and constituting a further embodiment of the invention;
**Figure 10** is a schematic diagram of a simplified grid structure;
**Figure 11** is a flow diagram of a method of cell actor operation in a method of coordinating traversal of a robotic load handling device and constituting a yet further embodiment of the invention;
**Figures 12** is a flow diagram of a path discovery operation of the method of Figure 11;
**Figure 13** is a flow diagram of a message processing be the cell actor of Figure 11;
**Figure 14** is a flow diagram of cell reservation processing of the method of Figure 11; and
**Figure 15** is a flow diagram of a path rediscovery operation of the method of Figure 11.

Throughout the following description, identical reference numerals will be used to identify like parts.

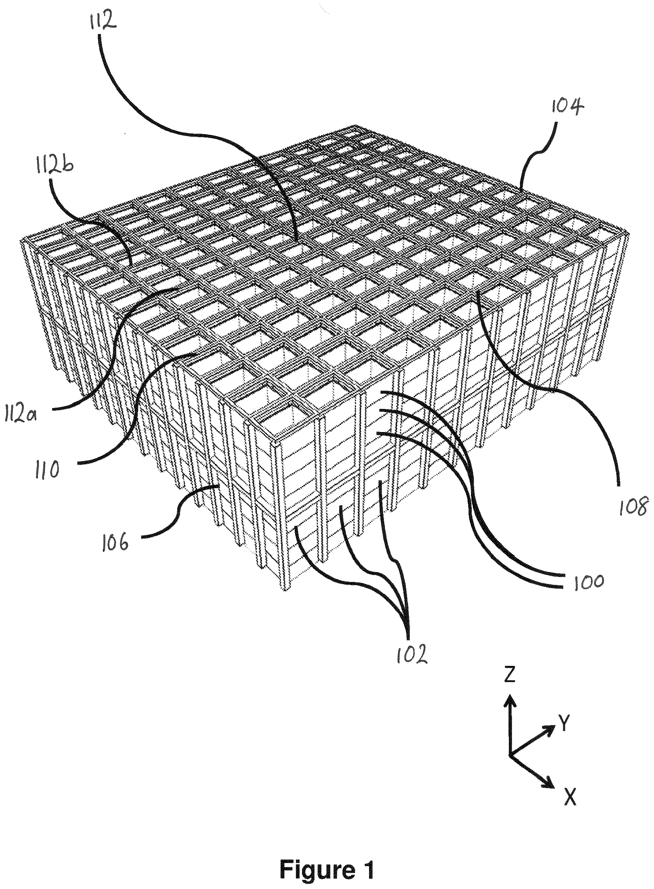

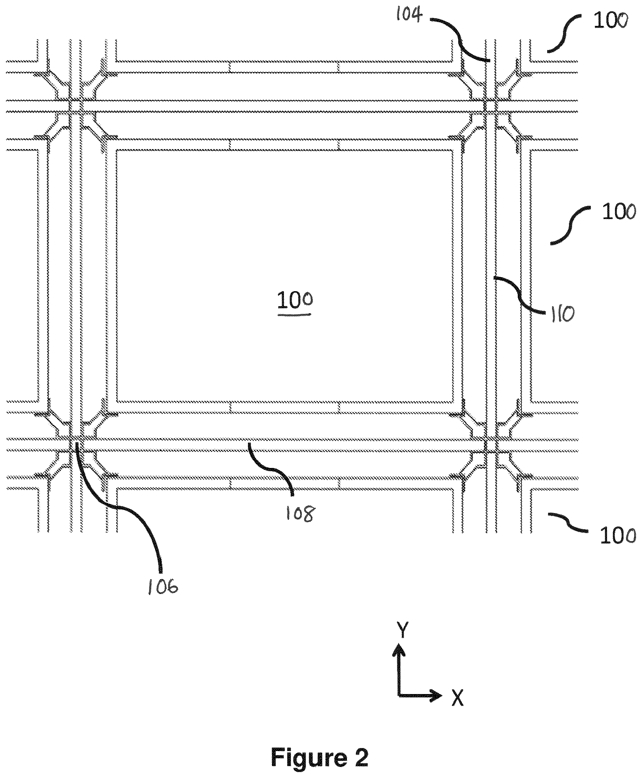

Referring to Figures 1 and 2, stackable containers, known as bins 100, are stacked on top of one another to form stacks 102. The stacks 102 are arranged in a frame structure 104 in a warehousing or manufacturing environment. Each bin 100 typically holds a plurality of product items (not shown), and the product items within a given bin 100 can be identical, or can be of different product types depending on the application.

The frame structure 104 comprises a plurality of upright members 106 that support horizontal members 108, 110. A first set of parallel horizontal members 108 is arranged perpendicularly to a second set of parallel horizontal members 110 to form a substantially horizontal grid structure supported by the upright members 106. The members 106, 108, 110 are typically manufactured from metal. The bins 100 are stacked between the members 106, 108, 110 of the frame structure 104, so that the frame structure 104 guards against horizontal movement of the stacks 102 of bins 100, and guides vertical movement of the bins 100.

It should be appreciated that any given storage system can may comprise a large number of containers 100 and many different goods can be stored in the stacks. Indeed, each container 100 can contain different goods within a single stack. Furthermore, it should be appreciated that the containers 100 can be empty whilst stored in the stacks or can contain items such as parcels or other items for future delivery.

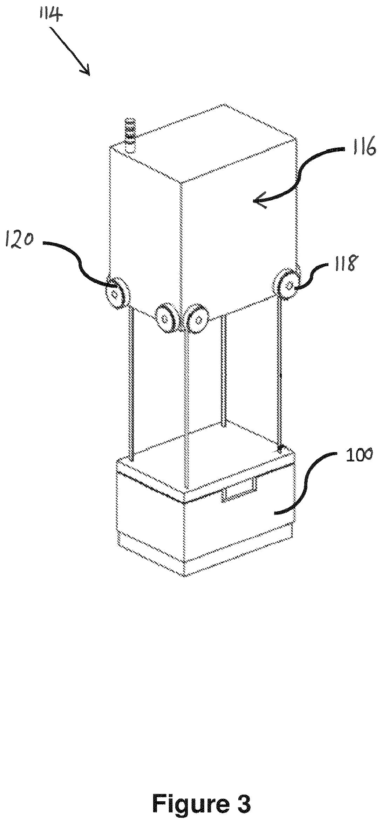

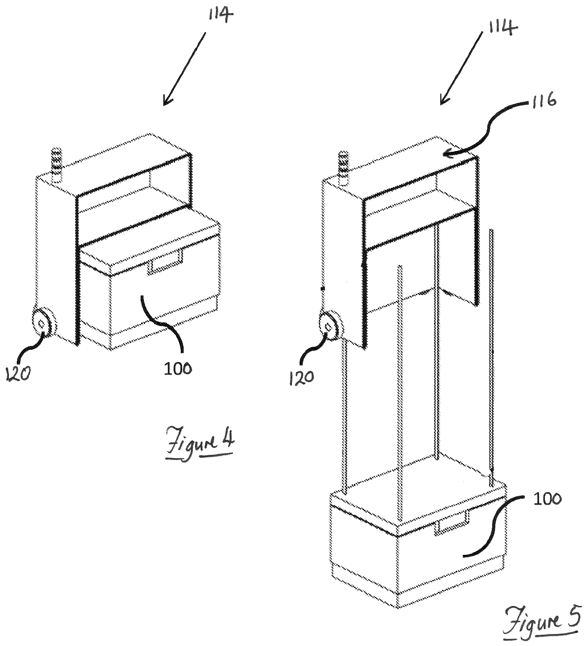

The top level of the frame structure 104 includes rails 112 arranged in a grid pattern across the top of the stacks 102. Referring additionally to Figures 3 and 4, the rails 112 support a plurality of robotic load handling devices 114. Referring back to Figure 1, a first set 112a of parallel rails 112 guide movement of the load handling devices 114 in a first direction (X) across the top of the frame structure 104, and a second set 112b of parallel rails 112, arranged perpendicular to the first set 112a, guide movement of the load handling devices 114 in a second direction (Y), perpendicular to the first direction. In this way, the rails 112 allow movement of the load handling devices 114 in two dimensions in the X-Y plane, so that the load handling device 114 can be moved into position above any of the stacks 102.

Referring back to Figures 3 to 5, each load handling device 114 comprises a vehicle 116 which is arranged to travel in the X and Y directions on the rails 112 of the frame structure 104, above the stacks 102. A first set of wheels 118, consisting of a pair of wheels 118 on the front of the vehicle 116 and a pair of wheels 118 on the back of the vehicle 116, are arranged to engage with two adjacent rails of the first set 112a of rails 112. Similarly, a second set of wheels 120, consisting of a pair of wheels 120 on each side of the vehicle 116, are arranged to engage with two adjacent rails of the second set 112b of rails 112. Each set of wheels 118, 120 can be lifted and lowered, so that either the first set of wheels 118 or the second set of wheels 36 is engaged with the respective set of rails 112a, 112b at any one time.

When the first set of wheels 118 is engaged with the first set of rails 112a and the second set of wheels 120 are lifted clear from the rails 112, the wheels 118 can be driven, by way of a drive mechanism (not shown) housed in the vehicle 116, to move the load handling device 114 in the X direction. To move the load handling device 114 in the Y direction, the first set of wheels 118 are lifted clear of the rails 112, and the second set of wheels 120 are lowered into engagement with the second set of rails 112a. The drive mechanism can then be used to drive the second set of wheels 120 to achieve movement in the Y direction.

In this way, one or more robotic load handling devices 114 can move around the top surface of the stacks 102 on the frame structure 104 under the control of a central picking system (not shown). Each robotic load handling device 114 is provided with a mechanism for lifting out one or more bins or containers from the stack to access the required products. In this way, multiple products can be accessed from multiple locations in the grid and stacks at any one time.

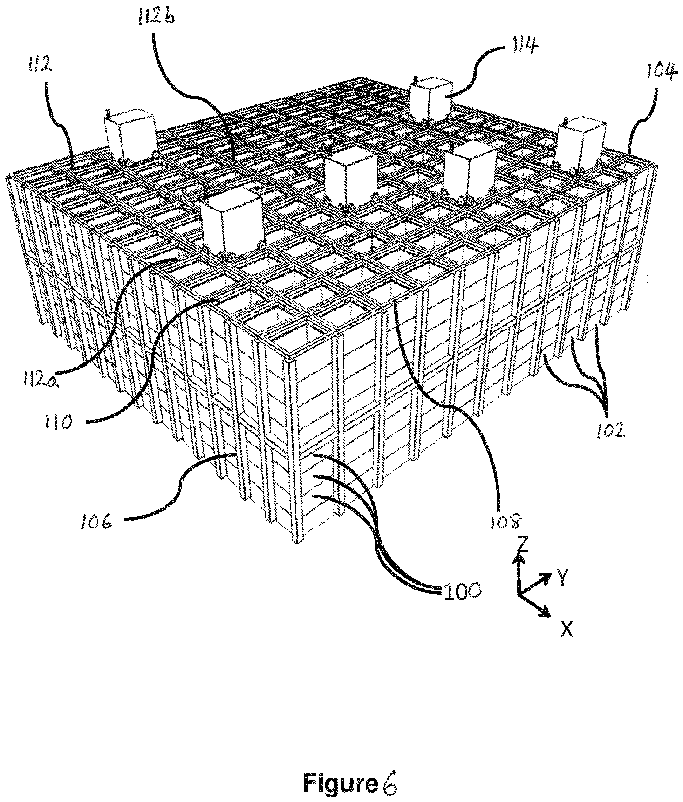

Turning to Figure 6, the system comprises a plurality of load handling devices 114 active on the stacks 102.

In order to coordinate translation of the robotic load handlers across the grid, a suitably configured computing device is provided along with associated communications networks, devices, software and firmware may provide a platform for enabling one or more embodiments as described above.

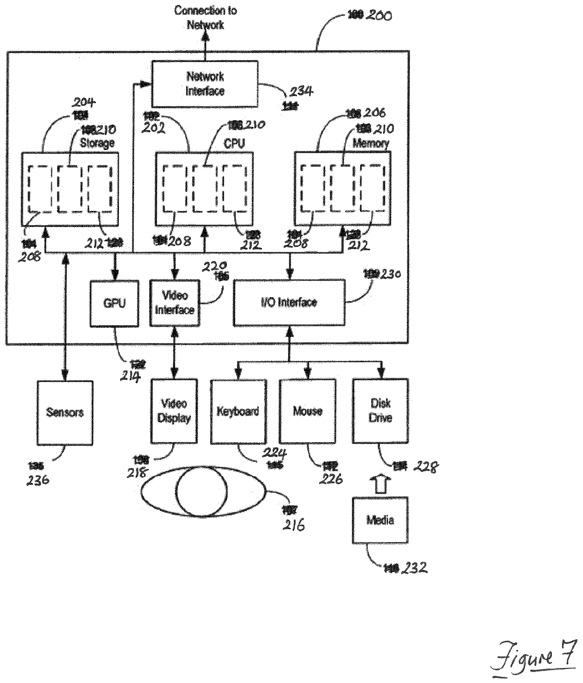

Referring to Figure 7, a computing device 200 comprises, for example, a processing resource, such as a central processing unit ("CPU") 202 operably coupled to a storage unit 204, such as one nor more hard disc drives or solid state drives, and to a memory unit 206 comprising, for example a digital memory and a Random Access Memory (RAM). The CPU 202 supports an operating system 208 and an application program 210, and handles data 212. The operating system 208, application program 210, and data 212 are stored, in this example, in the storage unit 204 and loaded into the memory unit 206, as required. The computing device 200 further includes, in this example, a graphics processing unit (GPU) 214, which is operatively coupled to the CPU 202 and to the memory unit 206 to offload intensive image processing calculations from the CPU 202 and run these calculations in parallel with the CPU 202. An operator 216 can interact with the computing device 200 using a display device 218 operably coupled via a video interface 220 to a bus 222 that is operably coupled to the CPU 202, the storage unit 204 and the memory unit 206. The operator 216 can also interact with the computing device 200 via various input/output devices, such as a keyboard 224, a mouse 226, and a removable media connector, such as a Universal Serial Bus port 228 coupled to the bus 222 via an Input/Output (I/O) interface 230. The computing device 200 can form part of a network via a network interface 234, allowing the computing device 200 to communicate with other suitably configured data processing systems (not shown). One or more different types of sensors 236 can be used to receive input from various sources.

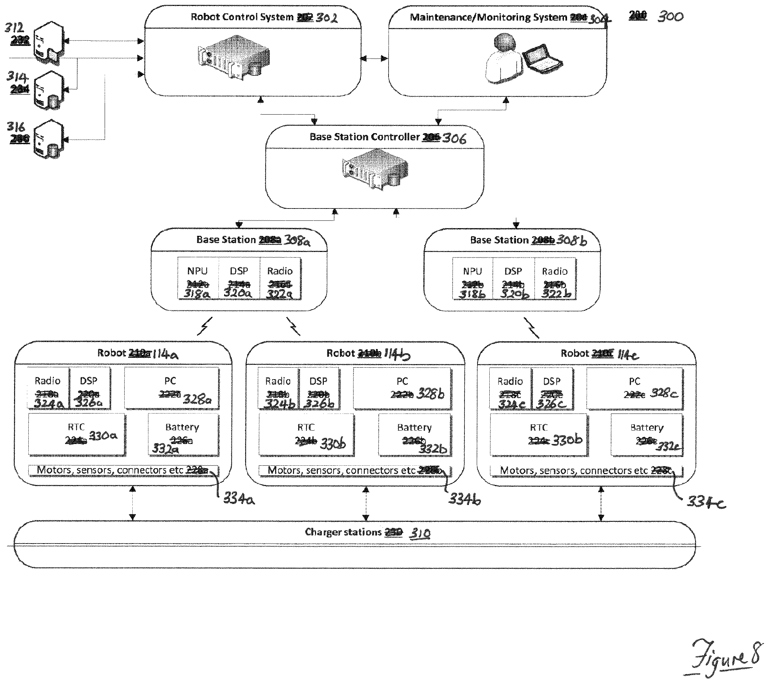

Referring to Figure 8, a high level exemplary implementation of a fully-/semi- automatic goods storage and retrieval systems will now be described. However, the skilled person should appreciate that various implementations of the system 300 can employ more or less components than described herein.

The system 300 comprises a robot control system 302, a maintenance/monitoring system 304, a base station controller 306, one or more base stations 308a and 308b, one or more robots 114a, 114b and 114c, and one or more charger stations 310. While only two base stations 308a and 308b, and three robots 114a, 114b and 14c are described above, it should be understood that that the system can comprise more or less robots and base stations in other embodiments of the system.

In this example, the system 300 also comprises one or more warehouse management systems (WMS) 312, order management systems 314 and one or more information management systems 316, respectively operably coupled to the robot control system 302. The warehouse management systems 312 stores information, for example, items required for an order, SKU#s in the warehouse, expected / predicted orders, items missing on orders, when an order is to be loaded on a transporter, expiry dates on items, what items are in which container, and/or whether items are fragile or big and bulky.

The robot control system 302 is configured, in this example, to control the navigation/routing of robots, including, but not limited to, moving from one location to another, collision avoidance, optimisation of movement paths, and/or control of activities to be performed. The robot control system 302 is implemented, in this example, using one or more servers, each containing one or more processors configured based upon instructions stored upon one or more non-transitory computer-readable storage media. The robot control system 302 is configured to send control messages to one or more load handling devices, receive one or more updates from one or more load handling devices, and communicate with one or more load handling devices using a real or near-real time protocol. The robot control system 302 receives information indicating robot location and availability from one or more base stations 308a and 308b. The robot control system 302 is configured to keep track of the number of robots available, the status of one or more robots, the location of one or more robots and/or their current instruction sets. The robot control system 302 is be configured, in this example, to process and/or send control messages to the one or more load handling devices in anticipation of future movements, potentially reducing the processor load, and also proactively managing the traffic load with respect to the communications links. Such an implementation could be advantageous in light of complex algorithms in use by the robot control system 302 in determining optimal pathways, calculating optimal locations for containers and/or determining reservations and/or clearances.

The maintenance / monitoring system (MMS) 304 is configured, in this example, to provide monitoring functions, including receiving alerts from one or more load handling devices 114 or one or more base stations 308a, 308b, establishing connections to query load handling devices 114. The MMS 304 also comprises an interface (not shown) for the configuration of monitoring functions. The MMS 304 interacts with the robot control system 302 to indicate when certain load handling devices 114 should be recalled.

The base station controller 306 stores master routing information to map load handling devices, base stations, and grids. In some examples, one base station controller 206 is provided per warehouse, but in other examples, a plurality of base station controllers can be employed. The base station controller 306 is designed to provide high availability. The base station controller 306 is configured to manage dynamic frequency selection and frequency allocation of the one or more base stations 308a and 308b.

The base stations 308a and 308b are, in this example, organised as a pool of base stations, which can then be configured to be active, on standby or to monitor the system. Messages can be routed through a variety of communications apparatus to from load handling devices. The communications apparatus can be any suitable communications apparatus. In some examples, the communications apparatus can support a Radio Frequency (RF) link, such as those falling under the 802.11 family of wireless standards. The base stations 308a and 308b comprise, in this example, processing units 318a, 318b, digital signal processors 320a, 320b, and radios 322a, 322b.

The one or more load handling devices 114a, 114b, 114c are configured to move around the grid and to perform operations. Operations, in this example, include moving a container from one stack to another and going to a charging station to recharge. The one or more load handling devices 114a, 114b, 114c are assigned to communicate with the one or more base stations 308a and 308b. The one or more load handling devices 114a, 114b, 114c are not necessarily all of the same type of robotic device. In this respect, the system 300 can comprise different robotic devices, for example load handling devices, with various shapes, designs and purposes, for example, there a robotic device can have a footprint of a single grid position, which winches containers for internal stowage, a cantilever robot, a bridge robot, and/or a recovery robot.

In this example, the load handling devices 114a, 114b, 114c have, respectively, radios 324a, 324b, 324c, digital signal processors 326a, 326b, 326c, processors 328a, 328b, 328c, real time controllers 330a, 330b, 330c, batteries 332a, 332b, 332c and motors, sensors, and/or connectors 334a, 334b, 334c.

The one or more charger stations 310 is configured to provide power to charge batteries on the one or more load handling devices 114a, 114b, 114c. The one or more charger stations 310 are further configured to provide high speed, wired data access to the one or more load handling devices 114a, 114b, 114c, and several charge stations are placed around the grid for use by the one or more robots 114a, 114b, 114c.

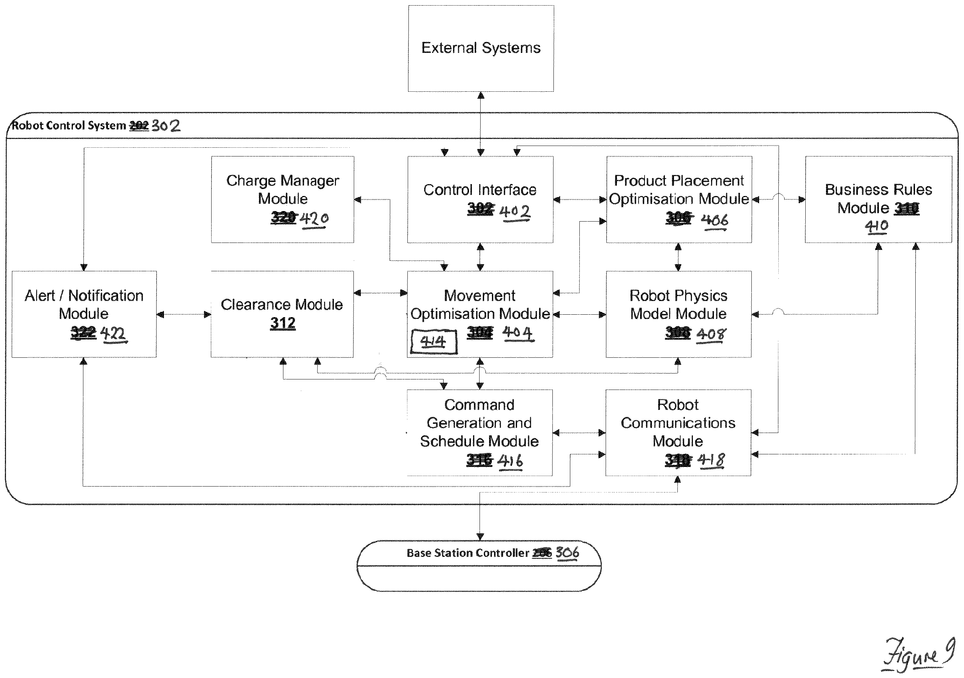

Referring to Figure 9, the control system 302 is configured to evaluate how to improve work allocations, movements of product and placement of product. The control system 302 is configured to schedule when specific types of movements should happen and in what order they should occur, depending on, for example, the application of various business rules and/or priority. The control system 302 is configured to determine both inbound and outbound factors in making decisions even relative to, for example, product placement. For example, the control system 302 estimates delivery location of product supply, and estimated outbound delivery of product. The control system 302 makes decisions, and sends signals for execution by an automatic system, and / or may allocate tasks efficiently to humans (pickers, loaders etc.).

The control system 302 determines which of one or more load handling devices 114 in the fulfilment of an order or for any other purpose. The action of the one or more load handling devices 114 can typically require the load handling devices 114 to traverse the grid, and/or to conduct actions, such as retrieving a container. The control system 302 is configured to analyse various pathways in the grid to determine one or more paths that are potentially preferential relative to other pathways, given a set of constraints and conditions. These preferential pathways are provided, one-time, periodically and/or dynamically to the load handling devices 114 to control their movements throughout the grid.

A path can be preferential for a number of reasons, including, but not limited to: less distance travelled, greater expected average velocity of load handling device, lower probability of encountering traffic (i.e. congestion), less total time required, lower probability of collision, less power used, ease of switching to alternate pathways, ability to avoid obstacles, for example a broken load handling device, a dropped item, a broken path, and/or a part of the path that is under repair.

The control system 302 uses various algorithms to identify, design and/or control the movement of various load handling devices it is connected to. In some examples, the control system 302 is implemented using one or more servers, each containing one or more processors configured to perform one or more sets of instructions stored upon one or more non-transitory computer readable media. Potential advantages for computer implementation include, but are not limited to, scalability, ability to handle large amounts of processing and computational complexity, increased reaction speed, ability to make decisions quickly, ability to conduct complex statistical analysis, ability to conduct machine learning, among others.

These algorithms to coordinate traversal of the load handling devices 114 over the grid will be discussed in greater depth later herein.

The control system 302 can be a real or near-real time control system (controlling the actions of the various units including load handling devices and optionally the associated other units involved, for example conveyors, pickers and/or humans). The control system 302 comprises a plurality of functional modules. The plurality of functional modules includes a control interface 402, a movement optimisation module 404, a product placement optimisation module 406, a robot physics model module 408, a business rules module 410, a clearance module 412, a reservation module 414, a command generation and scheduler module 416, a robot communications module 418, a charge manager module 420 and an alert/notification module 422. These modules 402, 404, 406, 408, 410, 412, 414, 416, 418, 420, 422 are implemented in various ways; in some examples they are implemented as applications stored as instructions on one or more computer-readable media to be performed by one or more processors.

The control system 302 provides real or near-real time control of the allocation of work, the movement of load handling devices and/or the placement of containers. The allocation of work, movement and placement of containers can be precipitated by actions as relevant to activities within a warehouse, such as the fulfilment of orders, the redistribution of containers to more easily accessible positions, estimated dispatch sequences, maintenance operations, and/or anticipation of future orders. The control interface 402 provides an interface for various external systems to provide directions and information into the control system 302. The control interface 402 can, in some examples, provide interfaces for human users and/or interfaces for interfacing with various machines and systems.

The control interface 402 can interact with various external databases, including but not limited to various warehouse management systems and order management systems. The control interface 402 can also receive information from the various robotic devices in the system, for example a malfunctioning load handling device, a load handling device requiring charging, a load handling device en route to a destination, a load handling device encountering an unexpected obstacle.

As mentioned above, the control interface 402 also receives and transmits information to and from the warehouse management system 312 relevant to the control and movement of load handing devices 114 and containers. Such information can include, but is not limited to, grid location and sizing, the establishment of sub-grids, master records of inventory and orders and/or a dispatch sequence, for example when orders need to go out. As actions are performed, for example containers brought to workstations, workstation operations completed and/or delivery totes filled, the control interface 402 provides updates to the warehouse management system 312. In some examples, there is a confirmation process between the warehouse management system 312 and the control interface 402.

The control interface 402 can also receive commands to stop the operation of a particular load handling device, a group of load handling devices or all of the load handling devices, for example in the event of a malfunction or an emergency.

The movement optimisation module 404 can be configured to optimise the movement of load handling devices through applying various algorithms to determine potentially advantageous routes from one location to another. The potential advantages can include shorter distance travelled, lower likelihood of encountering congestion, shorter time required, lower power consumption, coordination with movements of other load handling devices, routing around obstacles such as broken load handling devices or broken areas of track, or coordination with various workstation operations.

The movement optimisation module 404 is configured to provide work allocation, planning and scheduling functions, including developing a set of tasks and then selecting which pick station or robot should conduct which task. The movement optimisation module 404 is, in this example, configured to interact with the product placement optimisation module 406 in determining a set of potentially advantageous locations to place an object. In optimising movement, the movement optimisation module 404 is configured to consider various factors involved in both movement and the performance of an operation, for example the expected time required to get to a particular location, how deep the container is within a stack, how long it would take to dig a container out of a stack and/or the various operations necessary to move containers located above to other locations.

The movement optimisation module 404 also receives a set of inputs from the robot physics model module 408, which can communicate a set of constraints on the movement of the load handling device depending on various factors, for example the load handling device can only move at 50% of the maximum velocity as the load handling device is currently carrying delicate objects. The movement optimisation module 404 coordinates the movement of boxes into the grid, out of the grid and within the grid.

In some examples, the movement optimisation module 404 dynamically recalculates preferential paths during the course of a robot's journey to determine potentially an updated set of paths as conditions and constraints change over time.

The movement optimisation module 404 also interacts with the clearance module 312 and the reservation module 314 in determining whether the navigation of a proposed pathway will encounter issues involving the clearances and reservations of other load handling devices 114 and also determining pathways that can reduce the chances of encountering these issues.

In some examples, the clearance module 412, the reservation module 414 and the movement optimisation module 404 are used together as a path conflict resolver, such that the movement optimisation module 404 develops a path and then reserves the path using the reservation module 414, and the clearance module 412 provides a just-in-time approach to determining priority when robots are engaged in potentially conflicting paths.

The robot physics model module 408 is configured to store a set of variables that are designed to model the particular physical properties relevant to a load handling device. For example, the model may indicate physical characteristics such as the length, weight, height and width of the load handling device 114, the maximum carrying capacity of the load handling device 114, the rotational speed of the load handling device 114, the winch cycle time of the load handling device 114, the maximum velocity and acceleration of the load handling device 114, the ability for the load handling device 114 to perform certain actions given, for example, a set amount of battery life. The robot physics module 308 interfaces with the business rules module 410 in determining limits on certain characteristics of movement of the load handling device 114, including the maximum velocity, maximum acceleration, and maximum rotational speed of the load handling device 114. For example, if the load handling device 114 is carrying a number of cartons of eggs, the load handling device 114 can be required only to accelerate/decelerate at 25% of the maximum acceleration/deceleration of the load handling device 114 due to the vulnerability and fragility of the eggs due to physical forces. The business rules module 410 develops and applies a set of business rules based upon the particular circumstances of the warehouse, load handling devices 114 and communications systems. For example, the business rules module 410 can provide that for certain classes of items, various restrictions are in force for the robot physics model module 408 potentially to reduce the amount of damage incurred by goods in transit. Examples of where business rules can be implemented include high risk products, for example acid or bleach, containers with aerosols, and containers with flammable contents, among others. Empty containers can also be treated differently to other containers.

The clearance module 412 is configured to store and provide clearances for various load handling devices 114. A system of clearances can be accessed to determine whether a path is clear for a load handling device 114 to traverse. The clearance module 412 can be implemented as a passive collision avoidance system, wherein load handling devices 114 are only given the smallest amount of work possible without impacting performance. Upon providing a load handling device 114 with a new instruction, the clearance module 412 checks that it is not possible to collide with another load handling device 114, based upon, for example, grid dimensions, grid positions, move commands generated by planning, cancellation of move commands (generated on events such as a controlled stop), the current positions and speeds of load handling device 114, braking ability of robots as well as where they have been cleared to visit.

The clearance module 312 is configured to issue clearance "just in time", and is used to grant permissions to load handling devices 114 to continue along their planned paths.

The clearance module 412 provides to the control interface 402 what the clearances for a path would be, notification of when a clearance is issued, for example using strategies known in the art and so will not be described further herein.

The reservation module 414 is responsible for processing cell reservations as will be described in further detail later herein.

In some examples, the reservation module 414 is used to reserve routes in advance and to make sure that load handling devices 114 do not plan to take conflicting paths, especially where the load handling devices 114 are participating in a large number of actions and tasks taking place simultaneously. The movement optimisation module 404 comprises the reservation module 414 to establish the path reservations for load handling devices 114 sufficiently far into the future to enable forward planning.

The command generation and scheduler module 416 generates a set of instructions to be transmitted to the one or more load handling devices 114. These instructions can include, for example, that load handling device 114a is required to move to location B to obtain container C, bring container C to a workstation and then return container C to a particular location D. These instructions can be transmitted in a near-real time/real-time configuration, in a just-in-time configuration, and/or provided ahead of time to allow for planned/scheduled routes. Further, in some embodiments, the command generation and scheduler module 416 coordinates the reservations and clearances to help a robot expeditiously navigate its way across a facility.

The command generation and scheduler module 416 is configured to provide a command set comprising a single path, or one or more paths, and/or a number of operations to be performed at various locations. The command generation and scheduler module 416 provides these commands to the robot communications module 418 to be provided to the individual load handling devices 114. In some examples, the command generation and scheduler module 416 pre-populates instructions for a particular load handling device 114; these instructions can then be provided to the robot through the robot communications module 418 to be executed at a future time.

The robot communications module 418 is configured to transmit information back and forth from the robots via the one or more base stations and the base station controller 306. In some example, the robot communications module 418 communicates through the use of wireless signals. As indicated above, these instruction sets are not necessarily just-in-time; instruction sets can be sent for the coordination of future movements. The robot communications module 418 receives status reports from various load handling devices 114. The robot communications module 418 can be implemented in various ways, such as using synchronous, asynchronous, polling, push or pull methodologies. Further, various implementations do not necessarily include the use of communications "handshaking".

The charge manager module 420 is configured to develop a movement plan to recharge load handling devices 114. The charge manager module 420 is configured to estimate when load handling devices 114 will have a specified minimum charge, and ensure that all load handling devices 114 are able to charge at or before that point.

The alert notification module 422 is configured to provide an alert or notification to the control interface 402 when a potential issue has arisen, or based upon a predetermined business rule, for example a predetermined number of clearances have been withheld due to conflicts.

Operation of the system will now be described with reference to the problem of a single robotic load handling device (hereinafter referred to as a "load handler") traversing a simplified grid structure. It will be appreciated that the simplified example described below can be extended to cover a larger number of load handlers and a larger grid than described below. Indeed, it should also be appreciated that the term "grid" should not be interpreted narrowly and can embrace not only an array of rectangular cells, but any other shaped cellular structure, for example a hexagonal cell shape, or indeed any overall shape of a collection of the cells. It should be further appreciated that the grid configuration can include an absent or unusable cell.

Furthermore, the following description of the operation of the method of coordinating traversal of a load handling device across a grid will be in the context of an actor based distributed computation system, for example supported by the akka runtime environment supporting the instantiation of a plurality of actors, a first number of the plurality of actors representing cells of the grid and a second number of the plurality of actors representing load handlers. Of course, the skilled person will appreciate that the processing described herein can be implemented using other hardware and/or software techniques and/or programming languages to model a number of functional representations of the cells and/or load handlers.

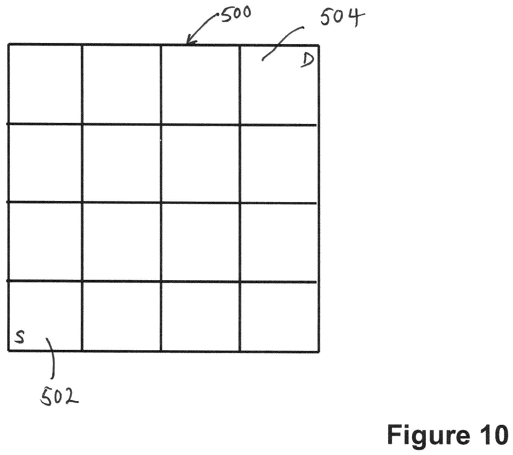

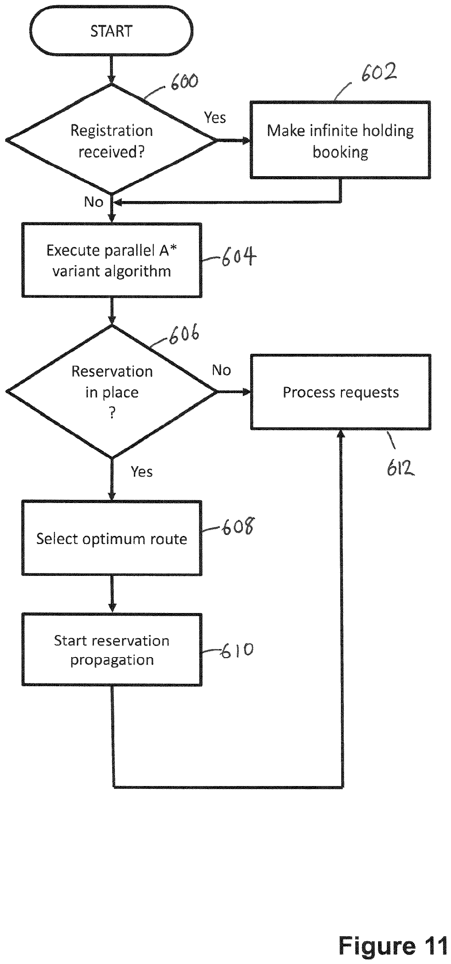

In operation, and referring to Figure 10 and 11, each actor representing a cell in the simplified grid 500 maintains a plurality of policies, each policy comprising, inter alia, a respective route, reservation time schedule data and kinematic data. In relation to the plurality of policies, the number of policies that can be stored is limited to eight policies in this example. However, this number of routes can vary depending upon implementation specifics. Additionally or alternatively, the provision of reservation time schedule data in the policy is optional as this data can be calculated from first principles, for example accounting for physical constraints and/or tolerances associated with translation of the load handler, on-the-fly by any of the cell actors, for example by interacting with the robot physics model module 408 and/or the clearance module 412.The physical constraints can include one or more physical obstacles. The tolerances can be kinematic tolerances.

In this example, the load handler 114 is instructed to traverse the grid 500 from a starting cell 502 to a destination cell 504.

By way of system initialisation, each cell actor is capable of receiving a registration (Step 600) from an actor representing a load handler (not shown) in order to record whether or not the cell represented by the cell actor is occupied initially by a load handler.

When a registration occurs, an infinite holding reservation (Step 602) is made in respect of the cell actor. In order to ensure that the number of cell actors proceed to execution of a pathfinding algorithm, a supervisory module (not shown) can be provided to ensure that all cell actors have completed the registration process.

Thereafter, each of the number of cell actors proceeds to execute a variant of the parallel A* algorithm (Step 604). This "discovery" process is performed by each cell actor. In order to execute the parallel A* variant algorithm, the cell actors require, in some examples, information concerning the destination cell 504 and/or kinematic data concerning the load handler 114, for example acceleration, maximum velocity, deceleration and/or direction change time, is communicated from a load handler data advisor module (not shown) to each of the number of cell actors.

In the event that the cell actor has not received a registration request, the cell actor proceeds to receive the information concerning the destination cell 504 and/or kinematic data concerning the load handler 114, which otherwise takes place after the infinite holding reservation is made following registration (Step 602).

Thereafter, each cell actor representing respective cells is the grid 500 is arranged to participate in the performance of the parallel A* variant algorithm (Step 604), which is a parallel A* pathfinding algorithm modified in the manner described hereinbelow.

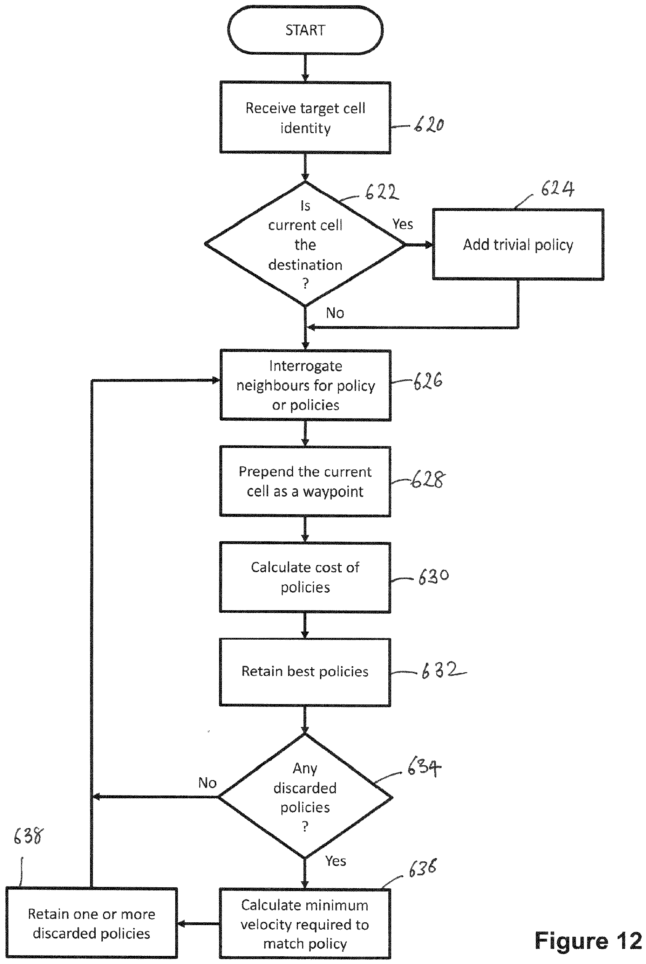

Turning to Figure 12, each cell actor receives (Step 620) an identity of a target cell 502 and proceeds to implement the parallel A* pathfinding algorithm in the following modified manner. The cell actor then determines (Step 622) whether it is the identified target cell 502. In the event that the cell actor is the identified destination cell, the cell actor adds a trivial route to the policy to indicate that there is no move to the cell actor.

Thereafter, and even if the identified destination cell is not the cell represented by the cell actor, the cell actor interrogates (Step 626) neighbouring cells, which excludes diagonal neighbours, in order to determine the routes stored in the policies of neighbouring cell actors. The routes obtained from the neighbouring cell actors are prepended (Step 628) with the identity of the cell corresponding to the cell actor. The cell actor then assesses each route by attributing (Step 630) a cost to each route. The cost can be based upon one or more of: acceleration of the load handler, the velocity of the load handler, a need to change direction, and/or a reserved status of a cell in each route of the route being assessed. Using the costs attributed to each route generated by the cell actor, the cell actor retains (Step 632) a number of the routes.

In this regard, in one example, a single best route from each non-diagonal neighbour is selected based upon the cost information calculated (Step 630) and an assumption that the load handler 114 is starting from being stationary. Subsequently, the cell actor then reviews (Step 634) the discarded routes, i.e. unselected in the previous step, and determined (Step 636) whether the remaining unselected routes in respect of each non-diagonal neighbour is respectively better than the selected routes in respect of each non-diagonal neighbour, based upon another assumption that the load handler 114 is travelling at a non-zero velocity. In this respect, for each route being reviewed (Step 636) in respect of a given neighbour, the selection of the previously disregarded route is based upon, for example, a minimum velocity at which the load handler 114 would have to travel in order to at least match the selected route in respect of the neighbour in terms of cost. In the event that the load handler 114 is incapable of supporting the minimum velocity determined, the route remains discarded. In respect of each neighbour, this process is repeated for each previously discarded route in order to generate, in this example, up to seven candidate routes for reinstatement, and then the candidate route having the lowest minimum velocity associated therewith is retained (Step 638).

In the event that none of the routes are initially discarded (Steps 632 and 634), or after reinstatement of discarded routes (Step 638), the cell actor repeats this process (Steps 626 to 638) as the policies of the cell actors representing the cells of the grid evolve as time progresses. In one example, a predetermined number of iterations can be employed. In another example, the iterations can be performed until the routes determined are substantially unchanged. It should also be appreciated that, whilst in this example, all cell actors participate in the execution of the parallel A* variant algorithm, cell actors representing a pertinent region of the grid 500, constituting a subset of all cells of the grid, can execute the parallel A* variant algorithm.

It should also be appreciated that the cell actor communicates the routes determined when interrogated by neighbouring cell actors.

Referring back to Figure 11, following execution of the parallel A* variant algorithm (Step 604), the cell actor determines (Step 606) whether a registration is in place in respect of the cell represented by the cell actor. In the event that the cell is reserved, the routes selected by the cell actor following execution of the parallel A* variant algorithm are analysed in order to select (Step 608) an optimum route from amongst up to eight, in this example, best routes resulting from the execution of the parallel A* variant algorithm. Thereafter, the cell actor generates a booking request message that is communicated (Step 610) to another cell actor representing a neighbouring cell that is a next step in the optimum route. The cell actor then proceeds to process requests (Step 612). Similarly, in the event that it was determined that a reservation was not in place in respect of the cell represented by the cell actor, the cell actor also proceeds to process requests (Step 612).

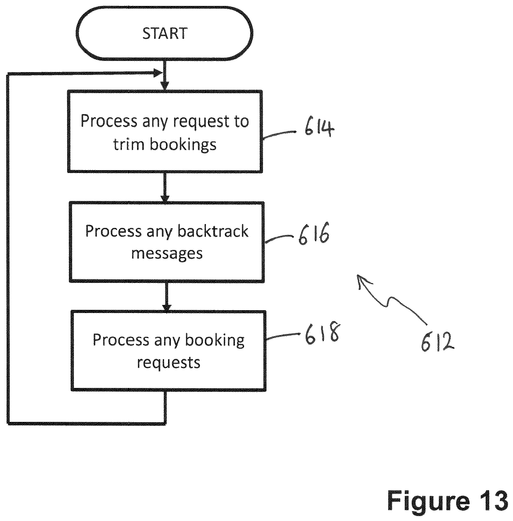

Referring to Figure 13, in respect of request processing functionality, each cell actor is arranged to process any request to trim a booking of a cell (Step 614), the processing of any backtrack message (Step 616) and the processing of any booking requests (Step 618) as will be described in greater detail hereinafter.

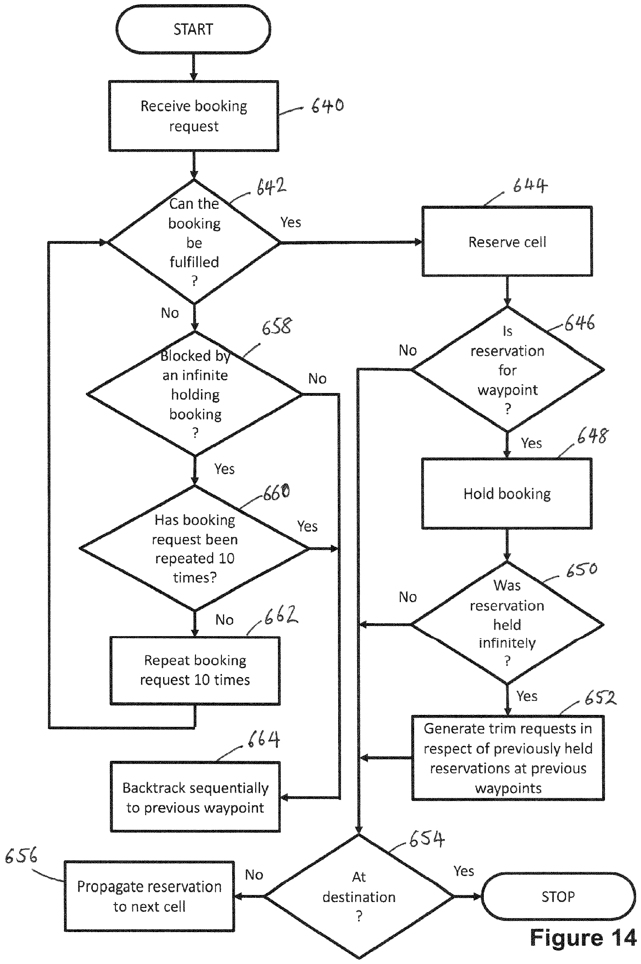

Referring also to Figure 14, when the cell actor receives (Step 640) a request to book the cell that it represents, the process of processing of the booking request (Step 616) is determined (Step 642) whether the booking request can be fulfilled. In this regard, the booking request comprises timing information, for example defining a time window for reservation, the information being derived from the time schedule data already provided in the policy associated with the optimum route selected or, as indicated above calculated on-the-fly.

In the event that the booking request can be fulfilled, the cell actor records a reservation (Step 644) in respect of the load handler to which the booking request relates for the period of time required. The cell actor then determines (Step 646) whether the reservation request was in respect of a waypoint. In this example, the waypoint is a cell and is associated with a point on a route where the load handler 114 is stationary for a period of time, for example while the load handler 114 turns.

If it is determined that the reservation request is in respect of a waypoint, then the cell actor holds (Step 648) the booking for as long as possible. The cell actor then determines (Step 650) whether the reservation made was infinite in nature. If the reservation was infinite, then the cell actor generates (Step 652) one or more "trim" requests that are sent to preceding waypoints that no longer require holding in respect of certain time periods on account of the new holding in respect of the cell represented by the cell actor, for example from a particular point in time onwards or between a particular start and finish time. This serves to make available cell reservation time at preceding waypoints that were previously reserved (Step 648) by other cell actors respectively representing the preceding waypoints that are now unnecessarily reserved in view of the current reservation. To this end, each cell actor, as mentioned above in relation to Figure 13 processes (Step 612) such trim requests.

Thereafter, or in the event that the reservation made by the cell actor is not in respect of a waypoint, the cell actor determines (Step 654) whether the reserved cell corresponds to the destination cell 504. If the destination cell 504 has been reached, then no further reservation activity is required in respect of the load handler 114 pursuing the optimum route to the destination cell.

Alternatively, if the reserved cell is determined not to be the destination cell 504, the responsibility to process a subsequent cell in the optimum route is sequentially passed (Step 656) to a subsequent cell actor representing a subsequent cell identified in the optimum route.

In the event that the cell actor determines (Step 642) that the booking request cannot be fulfilled, the cell actor determines (Step 658) whether the reason for it being able to fulfil the booking request is that the cell actor has an infinite holding booking recorded in respect of the cell that it represents. In the event that an infinite holding booking is determined as responsible for the inability to fulfil the booking request received, the cell actor determines (Step 660) whether the booking request has been processed a predetermined number of times, for example 10 times. In the event that attempts to process the booking request have not been made the predetermined number of times, further attempts (Step 662) are made to process the booking request until either the cell actor determines (Step 642) that the booking request can be fulfilled because the infinite holding booking in respect of another load handler has been "trimmed", or the infinite holding booking is not the reason for the inability to fulfil the booking request or the required predetermined number of repeated attempts to fulfil the booking request have been made, in which case the cell actor sends (Step 664) a backtrack message to a preceding cell actor representing a preceding cell in the optimum path with the objective of re-planning the optimum route from a last waypoint in the optimum route.

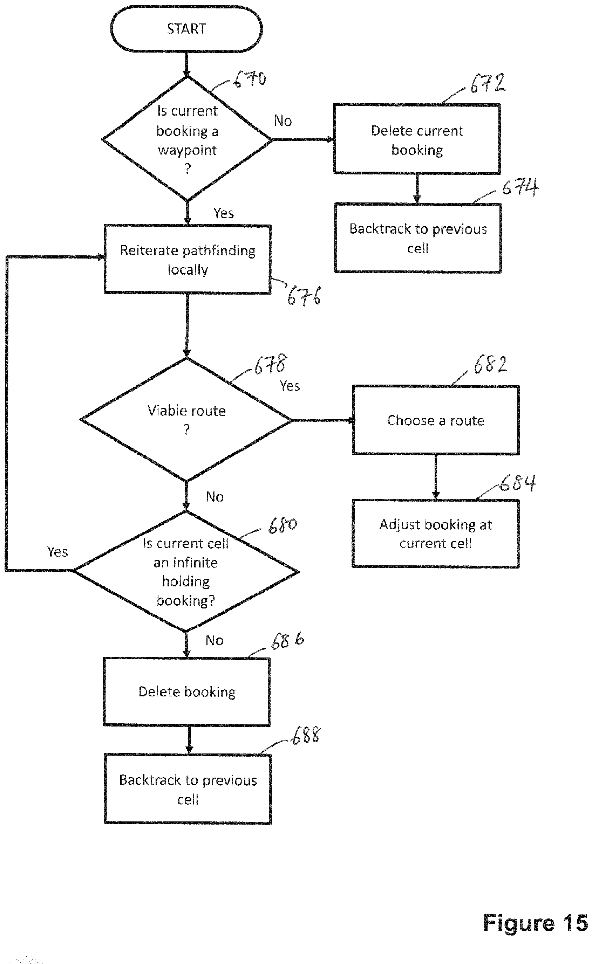

In this respect (Figure 15), the preceding cell actor receives a backtrack message from the cell actor and processes the backtrack message in the following way (Step 614). In this respect, the preceding cell actor determines (Step 670) whether a booking reservation in respect of the cell that it represents constitutes a waypoint. If the cell represented by the preceding cell actor has not been booked as a waypoint, the booking in respect of the cell represented by the preceding cell actor is deleted (Step 672) and another backtrack message is sent (Step 674) to another cell actor that represents another cell that precedes the cell represented by the preceding cell actor, and the above process (Step 670 to 674) is repeated by preceding cell actors until the process is performed by a cell actor that represents a cell that constitutes a waypoint. Once the cell actor representing the cell constituting the waypoint is reached, the waypoint cell actor reiterates (Step 676) the parallel A* variant algorithm described above, but in respect of an area local to the cell that constitutes the waypoint, for example an area of cells bounded within a bounding box defined by a predetermined supremum norm limit with respect to the cell constituting the waypoint, for example the supremum norm of five cells, although a different value can be selected, and indeed can even be based upon a different manner of defining the area local to the cell, depending upon implementation requirements.

The waypoint cell actor then analyses the routes generated as a result of executing reiterating the parallel A* variant algorithm in order to determine (Step 678) whether a new optimum route from the waypoint exists. In order to select the new optimum route, it is necessary to assess each route determined by the cell actor. In this respect, cell reservation data in respect of local cell actors with respect to time is available to the cell actor, which can then simulate the ability to reserve a number of cells along each route being assessed in order to determine an earliest start time for following a bounded portion of the route. Costs associated with following the bounded portion of each route are calculated and used as a basis for selecting (Step 682) one of the each routes as the new optimum route should one exist. With the new optimum route selected (Step 682), the reservation of the waypoint cell is adjusted (Step 684) and the booking of the subsequent cells in the new optimum route is respectively performed sequentially by subsequent cell actors respectively representing the subsequent cells (Steps 640 to 660).

If none of the routes generated are viable, then the waypoint cell determines (Step 680) whether the waypoint cell is the subject of an infinite holding booking. If the waypoint actor determines that the waypoint cell is the subject of an infinite holding booking, then the above process that requires the reiteration of the parallel A* variant algorithm is repeated (Steps 676 to 680).

In the event that the waypoint cell is not the subject of an infinite holding booking (Step 680), then the booking in respect of the waypoint cell is deleted (Step 686) and the process (Step 688) of backtracking to the previous waypoint in the optimum route is repeated respectively by the cell actors that respectively represent the cells preceding the waypoint in the optimum route.

As can be seen, the cell actors operate independently in the above-described manner, for example in a distributed system, in order to determine and reserve routes from the starting cell 502 in the grid 500 to the destination cell 504 in the grid 500.

As should be appreciated by the skilled person, the above example can readily be extended to instructions provided to multiple load handlers in order to traverse the grid from respective start cells to respective destination cells. As such, the cell actors are capable of performing the above exemplary operation multiple times in respect of each load handler and hence each load handler actor.

As will be further appreciated, the load handlers are not necessarily charged with a single task and so after completion of one route, a given load handler can be tasked with reaching a new destination from a current destination. In this respect, the load handler data advisor module can distribute information concerning the new destination before re-execution of the parallel A* variant algorithm a like manner to the execution of the same algorithm during system initialisation.

In some embodiments, different computing architectures can be employed, for example the servers employed can be implemented on a 'cloud computing' type platform for distributed computing. Likewise, any embodiments and implementations set forth herein in the context of the cloud can similarly be implemented on one or more local servers, a single remote server, a software as a service platform, or any other computing device can be used instead of the cloud. Indeed, the present system and method can be practiced on virtually any manner of computer device including a desktop computer, laptop computer, tablet computer or wireless handheld.

It will further be appreciated that whilst the system described above is in the context of load handlers traversing a grid, the above technique can be applied to any number of systems where a number of moveable items need to be moved across an area, for example but not exclusively, a grid type structure without interference in as simple yet quick manner as possible.

The present system and method can also be implemented as a computer-readable/useable medium that includes computer program code to enable one or more computer devices to implement each of the various process steps in a method in accordance with the present invention. In cases of more than one computer device performing the entire operation, the computer devices are networked to distribute the various steps of the operation. It is understood that the terms computer-readable medium or computer useable medium comprises one or more of any type of physical embodiment of the program code. In particular, the computer-readable/useable medium can comprise program code embodied on one or more portable storage articles of manufacture (e.g. an optical disc, a magnetic disk, a tape, etc.), on one or more data storage partitions of a computing device, such as memory associated with a computer and/or a storage system.

## Claims

1. A method of determining a route for one or more of a plurality of robotic load handling devices (114), each of the plurality of robotic handling devices being arranged to selectively move in either an X direction on a first set of parallel rails or tracks extending in an X-direction or in a Y direction on a second set of parallel rails or tracks extending in a Y-direction transverse to the first set of parallel rails or tracks in a substantially horizontal plane to form a grid pattern comprising a plurality of grid cells; the method comprising the steps of:
a) transmitting a destination grid cell (504) to one or more of the robotic handling devices;
b) for the or each robotic load handling device which receives a destination grid cell, determining a route from the respective starting grid cell (502) to the respective destination grid cell (504), the route comprising a plurality of grid cells which include one or more waypoint grid cells;
c) for the or each robotic load handling device which receives a destination grid cell, reserving the plurality of grid cells which comprise the route between the respective starting grid cell and the respective destination grid cell;
d) if a grid cell which forms a part of the route between the respective starting grid cell and the respective destination grid cell is already reserved, reverting to the most recent waypoint grid cell in the route and then determining an updated route between that waypoint grid cell and the respective destination grid cell;
e) iteratively applying steps c) and d) until a route to the respective destination grid cell is reserved.

2. A method according to claim 1, in which a robotic load handling device follows the reserved route from the respective starting grid cell to the respective destination grid cell.

3. A method according to claim 2 wherein a waypoint grid cell is a grid cell at which the robotic load handling device stops moving.

4. A method according to claim 3 wherein a waypoint grid cell is a grid cell at which the robotic load handling device changes direction between the X direction and the Y direction.

5. A method according to any of claims 1 to 4 in which a grid cell reservation is released after the robotic load handling device has left the reserved grid cell.

6. A method according to any of claims 1 to 5 in which in step d) the updated route from the respective starting grid cell to the respective destination grid cell is determined using an A* variant pathfinding algorithm.

7. A method according to any of claims 1 to 7 in which in step b) the route from the most recent waypoint grid cell to the respective destination grid cell is determined using an A* variant pathfinding algorithm.

8. A method according to claim 6 or claim 7, wherein the A* variant pathfinding algorithm is adapted to employ a cost function.

9. A method according to claim 8 in which in step b) and/or step d), a set of routes to the respective destination grid cell are determined and one route from each set of routes is selected using the cost function.

10. A storage system comprising:
a first set of tracks extending in a first direction;
a second set of tracks extending in a second direction transverse to the first direction, to form a grid comprising a plurality of grid cells,
a framework structure on which the first set of tracks and the second set of tracks are received such that a stack of containers may be stored below each of the plurality of grid cells;
a plurality of robotic load handling devices for lifting and moving containers stacked in stacks within the storage system, each of the load-handling devices being configured to move on the tracks above the stacks of containers, each of the plurality of robotic load handling devices being configured to perform a method of according to any of claims 1 to 9.

11. A storage system according to claim 10, wherein the storage system comprises a control system comprising one or more processors, the control system being configured to instantiate a first plurality of actors representing grid cells and a second plurality of actors representing robotic load handling devices load handlers.

12. A data carrier device comprising computer executable code for performing a method according to any of claims 1 to 9.
